# FASCICULE DE BREVET EUROPEEN

(11) **EP 2 399 823 B1**
(45) Date de publication et mention de la délivrance du brevet: **25.02.2015**
(21) Numéro de dépôt: 11171081.0
(22) Date de dépôt: 22.06.2011
(51) Int. Cl.: B64C 1/40, B64C 1/06

(54) **Ensemble de fixation comprenant des rampes pour la fixation de systèmes dans un aéronef**
Befestigungseinheit, die Rampen für die Fixierung von Systemen in einem Luftfahrzeug umfasst
Attachment assembly including ramps for attaching systems in an aircraft

(30) Priorité: 22.06.2010 FR 1002611; 13.07.2010 FR 1002943
(43) Date de publication de la demande: 28.12.2011
(73) Titulaire: Airbus Operations, 31060 Toulouse (FR)
(72) Inventeur: Holvoet, Julie, 31300 Toulouse (FR); Fauvet, Maximilien, 31200 Toulouse (FR); Reynes, Didier, 31200 Toulouse (FR); Tomasi, Marc, 31100 Toulouse (FR); Rebolloso, Laurent, 31480 Le Grès (FR); Michelet, Luc, 31700 Cornebarrieu (FR)
(74) Mandataire: Santarelli

(56) Documents cités:
- WO-A2-2010/004121
- DE-A1-102007 061 425
- FR-A1- 2 904 804
- FR-A1- 2 936 219
- US-A- 5 680 680

## Description

La présente invention concerne un ensemble de fixation pour la fixation de systèmes dans un aéronef.

La structure du fuselage d'un aéronef est usuellement constituée de cadres s'étendant dans des plans transversaux, de lisses s'étendant sensiblement selon une direction longitudinale de l'aéronef à l'extérieur des cadres, et d'une peau qui recouvre lesdites lisses et est fixée à celles-ci. La peau est également fixée aux cadres, par l'intermédiaire de pièces de liaison connues sous le nom de "clip".

Au niveau de la cabine notamment, les faces intérieures du fuselage sont recouvertes successivement par des matelas isolants, réalisant une isolation thermique et acoustique de la cabine, et par des panneaux de revêtement dont la face intérieure reste visible depuis la cabine et forme donc une face de finition. Entre deux cadres successifs du fuselage, la peau dudit fuselage est recouverte de matelas isolants appelés matelas de peau (appelés "field blankets" en anglais). Chaque cadre du fuselage est par ailleurs recouvert par un matelas appelé matelas de cadre (appelé "frame blanket" en anglais). Une zone de recouvrement peut être prévue entre des matelas de cadre et de peau consécutifs.

Entre les matelas isolants et les panneaux de revêtement sont agencés des systèmes (équipements, câbles électriques, réseaux hydrauliques et pneumatiques...).

Ces systèmes sont usuellement fixés à la structure du fuselage, par des dispositifs de fixation ponctuels traversant les matelas isolants recouvrant ladite structure. Ainsi par exemple, les câbles électriques sont fixés aux cadres du fuselage, à l'aide de dispositifs de fixation ponctuels comportant une tige qui traverse le cadre et le ou les matelas qui le recouvrent. Ces dispositifs de fixation ponctuels comportent également des rondelles de blocage de la tige de part et d'autre du cadre, et une patte dans laquelle vient s'engager un collier à serrage rapide recevant un ou plusieurs câbles. Les tuyaux prévus pour la circulation d'air conditionné sont quant à eux usuellement fixés aux lisses, à l'aide de dispositifs de fixation ponctuels comprenant un collier de serrage porté par un support fixé à une lisse par des vis ; ces vis traversent la lisse et le matelas de peau recouvrant cette dernière.

Pour la fixation des systèmes, il est donc nécessaire de réaliser des trous dans la structure du fuselage ainsi que des trous dans les matelas isolants.

Les trous réalisés dans la structure fragilisent celle-ci et obligent donc à prévoir des zones épaissies ou autres renforts structuraux à leur proximité. Ces trous compliquent donc la conception du fuselage.

Les trous réalisés dans les matelas isolants dégradent les performances d'isolation de ces derniers, créant autant de ponts thermiques et acoustiques. Ils réduisent également leur étanchéité à l'eau (or les matelas isolants ont également pour fonction de drainer, jusqu'au fond de barque, l'eau de condensation apparaissant sur la peau de l'aéronef). En outre, la réalisation de ces trous complique considérablement la fabrication des matelas et grève leurs coûts de revient. Ainsi par exemple, au niveau de chaque trou réalisé en bordure de matelas pour la fixation des câbles électriques aux cadres (et pour la fixation des matelas eux-mêmes auxdits cadres), la couche de laine de verre du matelas doit être remplacée par un disque en mousse, qui facilite la réalisation du trou et renforce le matelas autour dudit trou afin d'éviter que le matelas ne se déchire.

De surcroît, en cas de modification tardive (alors que l'aéronef est en phase d'assemblage par exemple) de la structure du fuselage ou d'un système, il est nécessaire de réaliser un ou plusieurs trous supplémentaires dans le matelas concerné et/ou dans l'élément de structure concerné.

La réalisation d'un trou supplémentaire dans un matelas est un procédé particulièrement long et fastidieux. A cette fin, il convient en effet de coller une bande adhésive sur chaque face du matelas à l'emplacement du trou, découper un disque dans le matelas à l'emplacement du trou à l'aide d'un premier outil coupant spécifique, retirer le disque de matelas ainsi découpé et le remplacer par un disque de mousse, coller à nouveau une bande adhésive sur chaque face du matelas de façon à recouvrir et maintenir le disque de mousse, percer le matelas au centre du disque de mousse à l'aide d'un deuxième outil coupant spécifique de façon à former le trou. Lorsqu'un trou supplémentaire est réalisé dans un matelas, il est en outre nécessaire de reboucher l'ancien trou désormais inutilisé.

La réalisation tardive de trous dans un élément de structure pose également problème. Ces trous affaiblissent la structure et, parce qu'ils ne sont pas prévus lors de la conception du fuselage, obligent très souvent à ajouter des renforts structuraux. De surcroît, lorsque la structure est en un matériau composite, la réalisation d'un trou requiert l'utilisation d'un outil spécifique, génère des copeaux nocifs -et donc dangereux pour l'opérateur chargé de réaliser le trou-, et provoque des délaminations du matériau composite autour du trou. Ces problèmes sont plus difficiles à maîtriser lorsque la réalisation du trou n'est pas prévue d'origine et ne s'effectue pas au poste de fabrication de la structure.

Pour toutes les raisons précédemment évoquées, il est souhaitable de limiter le nombre de trous réalisés dans la structure et dans les matelas pour la fixation des systèmes.

L'invention vise à pallier ces inconvénients en fournissant un ensemble de fixation qui permette de réduire le nombre de trous à réaliser, aux fins de fixation des systèmes, dans la structure du fuselage d'un aéronef et dans les matelas isolants qui recouvrent cette structure. Dans une version préférée, l'invention propose un ensemble de fixation permettant la fixation de systèmes sans qu'aucun trou ne soit réalisé, ni dans la structure, ni dans les matelas isolants.

Un autre objectif de l'invention est de fournir un ensemble de fixation permettant d'éviter d'avoir à réaliser des trous supplémentaires dans la structure du fuselage ou dans les matelas isolants en cas de modification tardive de cette structure ou d'un système.

A cette fin, l'invention propose un ensemble de fixation, pour la fixation de systèmes dans un aéronef comprenant des cadres, une peau et des pièces de liaison entre la peau et les cadres, dites clips. L'ensemble de fixation selon l'invention est caractérisé en ce qu'il comprend :
- des rampes, chaque rampe étant adaptée pour s'étendre entre deux cadres consécutifs de l'aéronef,
- pour chaque rampe, des moyens de fixation de la rampe permettant la fixation de ladite rampe à deux clips situés respectivement sur deux cadres consécutifs de l'aéronef,
- des supports de système, fixés ou adaptés pour être fixés aux rampes, chaque support de système pouvant recevoir au moins un système.

L'invention consiste donc à remplacer les dispositifs de fixation ponctuels antérieurs, ancrés dans les cadres et lisses de l'aéronef à l'aide de tiges ou vis traversant à la fois la structure et les matelas isolants, par des rampes s'étendant entre deux cadres consécutifs et portant des supports de système. Ces rampes sont agencées entre les deux cadres, et sont fixées à des clips reliant lesdits cadres à la peau de l'aéronef. Aucun trou n'est donc réalisé dans les cadres ou lisses pour la mise en oeuvre de l'ensemble de fixation selon l'invention.

Avec un tel ensemble de fixation, les rampes sont avantageusement disposées devant un matelas de peau, ce qui signifie que chaque rampe s'étend à l'intérieur de l'espace délimité par l'isolation du fuselage ; en d'autres termes, on observe successivement, depuis l'extérieur vers l'intérieur de l'aéronef, la peau de l'aéronef, les lisses, les matelas isolants, les rampes. Dans ce cas de figure, les rampes participent également au maintien des matelas de peau contre la peau extérieure et les lisses de la structure de l'aéronef.

De préférence, les moyens de fixation de chaque rampe sont reliés aux clips par collage, de sorte qu'aucun trou n'est réalisé dans les clips. Dans cette version préférée, la mise en oeuvre de l'ensemble de fixation selon l'invention ne nécessite donc aucun perçage dans la structure du fuselage de l'aéronef.

Les clips reliant chaque cadre à la peau de l'aéronef sont généralement régulièrement répartis le long dudit cadre. Il est par conséquent aisé de positionner les rampes le long des cadres de façon régulière, avec une distance constante entre deux rampes successives, en vue d'un maintien optimal des systèmes.

Par ailleurs, une fois l'ensemble de fixation mis en oeuvre, seuls les moyens de fixation de la rampe, ou plus précisément une partie de ceux-ci, traversent l'isolation réalisée par les matelas de peau et de cadre, et ce quel que soit le nombre de systèmes portés par la rampe. L'isolation est donc traversée en un nombre de points considérablement réduit par rapport aux dispositifs antérieurs connus. En outre, ces traversées surviennent à proximité des cadres ; il est donc possible de configurer les moyens de fixation des rampes de façon à ce que ces traversées s'effectuent chacune à la jonction entre un matelas de peau et un matelas de cadre. Dans ces conditions, aucun trou n'est à prévoir dans les matelas isolants pour la mise en oeuvre de l'ensemble de fixation selon l'invention. Tout au plus est-il préférable de prévoir des encoches dans les bords des matelas, au niveau des moyens de fixation des rampes, si un recouvrement important des matelas de peau et de cadre est souhaité.

Enfin, outre leur fonction de réception des supports de système, les rampes selon l'invention, qui s'étendent devant les matelas de peau, ont aussi pour fonction de maintenir ces matelas en position contre les lisses. La présence de ces rampes permet donc de réduire au strict minimum les points d'ancrage des matelas de peau à la structure. On limite ainsi considérablement les trous à réaliser dans la structure et dans les matelas de peau pour la fixation de ces derniers. Il peut même être envisagé, selon la forme du fuselage, la masse des matelas, la rigidité des rampes, etc., de ne prévoir aucun ancrage des matelas de peau à la structure ; dans ce cas, les matelas de peau ne présentent aucun trou et ne sont maintenus en position que par les rampes.

De préférence, chaque rampe est adaptée pour s'étendre sensiblement horizontalement entre deux cadres consécutifs de l'aéronef.

Avantageusement, pour chaque rampe, les moyens de fixation de la rampe comprennent :
- deux équerres, chaque équerre présentant une première branche destinée à être fixée à un clip de l'aéronef et une deuxième branche pourvue d'une fente,
- à chacune des extrémités de la rampe, une patte de fixation adaptée pour pouvoir être insérée dans la fente de l'une desdites équerres, chaque patte de fixation comportant à son extrémité libre un rebord qui forme une butée s'opposant au retrait la patte de fixation une fois celle-ci insérée dans la fente.

Avantageusement, chaque rampe comprend, à chacune de ses extrémités, une ailette, dite ailette de maintien de matelas, s'étendant sensiblement orthogonalement à une direction axiale de la rampe et destinée à s'étendre dans une direction opposée à la peau de l'aéronef aux fins de maintien d'un matelas isolant dit matelas de cadre.

Une autre forme de réalisation prévoit que les rampes soient disposées au niveau des matelas de peau. Dans ce cas, on prévoit alors par exemple qu'au moins une rampe présente une forme globale allongée avec une section en I, présentant un corps central duquel s'étendent sur deux côtés opposés à chaque fois deux ailes et que le logement formé entre deux ailes disposées d'un même côté du corps central est adapté pour recevoir un flanc de matelas isolant.

Dans cette forme de réalisation, chaque rampe présentant une forme globale allongée avec une section en I, est par exemple réalisée en trois pièces, une pièce inférieure comportant deux ailes inférieures, une pièce centrale et une pièce supérieure comportant deux ailes supérieures, et une pièce de liaison est disposée à chaque extrémité de rampe en assurant d'une part la liaison des trois pièces de la rampe et d'autre part la liaison de la rampe à un clip.

Selon un premier mode de réalisation des supports de système, chaque support de système comporte une embase adaptée pour s'accoupler avec un logement ménagé sur une rampe, chaque rampe comprenant avantageusement une pluralité de logements (pour la réception d'une pluralité de systèmes). De préférence, les logements ménagés sur les rampes sont tous identiques et les embases des supports de système sont toutes identiques, indépendamment des systèmes à fixer. Chaque support de système peut alors être accouplé à l'un quelconque des logements ménagés sur une rampe. Cette caractéristique rend les systèmes interchangeables en termes de position entre les cadres.

De préférence, l'embase de chaque support de système et chacun des logements ménagés sur les rampes présentent des sections complémentaires et comportent des moyens de verrouillage s'opposant au retrait du support de système. A noter que les moyens de verrouillage peuvent résulter de la forme complémentaire de l'embase et du logement, et/ou comprendre des moyens structurels supplémentaires.

Diverses formes de réalisation sont possibles pour les embases des supports de système et les logements des rampes. Par exemple, l'embase de chaque support de système et chaque logement présentent des sections complémentaires en queue d'aronde. En variante, chacun des logements ménagés sur les rampes est constitué d'au moins un trou, de préférence circulaire, et l'embase de chaque support de système comprend au moins un pion, de préférence de section circulaire, muni à son extrémité libre d'une tête conique déformable élastiquement (moyens de verrouillage) apte à être insérée dans un trou d'une rampe et à s'opposer au retrait du support de système.

Selon un deuxième mode de réalisation des supports de système, pour chaque rampe, chaque support de système comprend d'une part une cavité formée sur la rampe ayant une section adaptée pour recevoir des systèmes cylindriques circulaires ayant des diamètres divers, et d'autre part au moins un lien (collier, languette souple...) et des moyens d'ancrage de lien de part et d'autre de ladite cavité. De préférence, chaque support de système comprend également des moyens d'ancrage de lien en partie centrale de la cavité.

L'invention s'étend à un aéronef comprenant au moins un ensemble de fixation selon l'invention et des systèmes fixés à l'aide dudit ensemble de fixation.

D'autres détails et avantages de la présente invention apparaîtront à la lecture de la description suivante, qui se réfère aux dessins schématiques annexés et porte sur des modes de réalisation préférentiels, fournis à titre d'exemples non limitatifs. Sur ces dessins :
- la figure 1 est une vue schématique en perspective, coupée par un plan longitudinal, d'une portion de fuselage d'aéronef entre deux cadres consécutifs, sur laquelle apparaît une rampe d'un ensemble de fixation selon l'invention,
- la figure 2 est une vue en perspective, coupée par un plan longitudinal, d'une partie de la rampe illustrée sur la figure 1,
- les figures 3 et 4 sont des vues en perspective d'un premier mode de réalisation d'un support de système d'un ensemble de fixation selon l'invention,
- les figures 5 et 6 sont des vues en perspective d'un deuxième mode de réalisation d'un support de système d'un ensemble de fixation selon l'invention,
- les figures 7 et 8 sont des vues en perspective d'un troisième mode de réalisation d'un support de système d'un ensemble de fixation selon l'invention,
- les figures 9 et 10 sont des vues en perspective d'un quatrième mode de réalisation d'un support de système d'un ensemble de fixation selon l'invention,
- les figures 11 et 12 sont des vues en perspective d'un cinquième mode de réalisation d'un support de système d'un ensemble de fixation selon l'invention,
- la figure 13 est une vue schématique de dessus d'une portion de fuselage d'aéronef entre deux cadres consécutifs, sur laquelle apparaissent deux rampes d'une variante de réalisation d'un ensemble de fixation selon la présente invention,
- la figure 14 est une vue à échelle agrandie illustrant la fixation d'une extrémité d'une rampe montrée sur la figure 13,
- la figure 15 représente une rampe en perspective,
- la figure 16 montre une première partie de la rampe montrée sur la figure 15,
- la figure 17 montre la première partie de la figure 16 surmontée d'une seconde partie de la rampe de la figure 15,
- la figure 18 montre en perspective une troisième partie de la rampe montrée sur la figure 15, et
- les figures 19 et 20 sont des vues en perspective sous deux angles différents d'une pièce de liaison assurant la liaison de la rampe montrée sur la figure 15 à un clip.

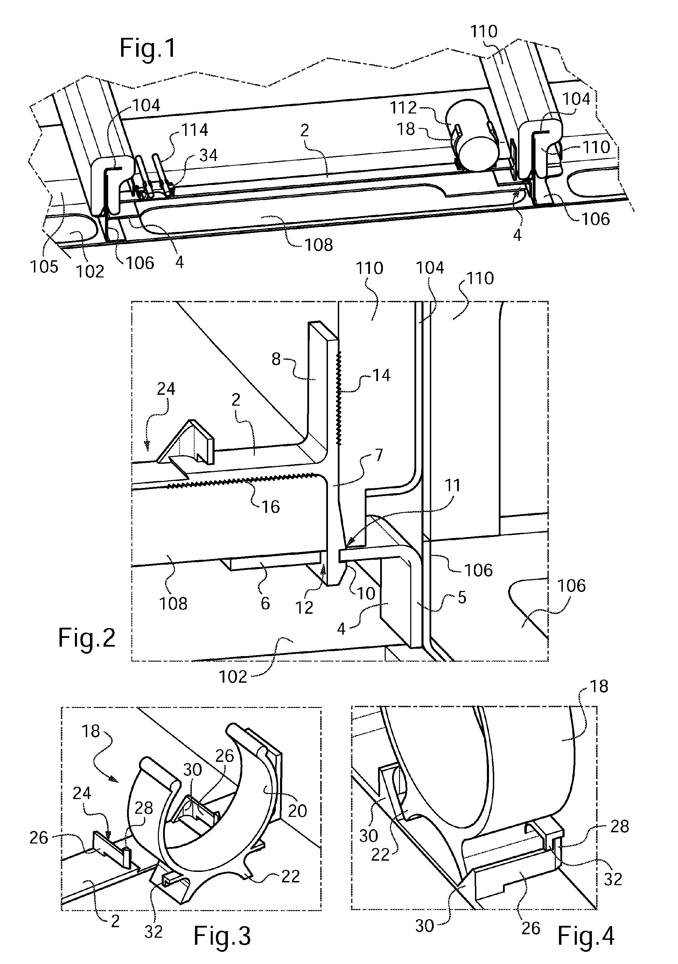

Un fuselage d'aéronef, tel celui que l'on peut observer sur les figures 1 et 2, présente une structure comprenant usuellement des cadres 104 s'étendant transversalement et présentant une section en Z, des lisses 105 s'étendant selon la direction longitudinale du fuselage à l'extérieur des cadres 104, et une peau 102 formée à l'extérieur des lisses 105 et directement fixée à ces dernières. La peau 102 est également fixée aux cadres 104 par des pièces de liaison, connues sous le nom de clips 106.

La structure du fuselage est recouverte, notamment au niveau de la cabine de l'aéronef, par des matelas isolants assurant une isolation thermique et acoustique de la cabine. Ces matelas isolants comprennent des matelas de peau 108 s'étendant entre les cadres 104, et des matelas de cadre 110 recouvrant lesdits cadres 104.

Divers systèmes, dont par exemple des conduits 112 de circulation d'air conditionné et des câbles électriques 114, sont agencés devant les matelas de peau. Selon l'invention, ces systèmes sont fixés à la structure du fuselage par un ensemble de fixation comprenant une pluralité de rampes 2 (une seule de ces rampes étant représentée sur la figure 1) ainsi que des supports de système, tels les supports 18 et 34 visibles sur la figure 1, portés par lesdites rampes.

Dans toute la suite, l'ensemble de fixation selon l'invention est observé et décrit assemblé et monté dans un aéronef.

Chaque rampe 2 de cet ensemble s'étend sensiblement horizontalement entre deux cadres consécutifs 104 du fuselage. En d'autres termes, chaque rampe 2 s'étend sensiblement selon la direction longitudinale du fuselage, quasiment d'un cadre à un autre. Entre deux cadres 104 consécutifs sont ainsi agencées une pluralité de rampes 2 de préférence régulièrement réparties sur la hauteur du fuselage (c'est-à-dire le long des cadres). Le nombre de rampes à agencer entre deux cadres consécutifs est choisi de façon à garantir une fixation sure des systèmes tout en limitant au maximum la masse apportée par les rampes. On prévoit ainsi par exemple au moins deux rampes, de préférence trois rampes, entre le plancher et le plafond de la cabine de l'aéronef.

Chaque rampe 2 est fixée, à chacune de ses extrémités, à un clip 106 du fuselage. A cette fin, l'ensemble de fixation selon l'invention comprend, pour chaque extrémité de chacune des rampes 2, une équerre 4 telle qu'illustrée sur la figure 2. Chaque équerre 4 comprend d'une part une première branche 5 pour sa fixation à un clip 106 du fuselage ; cette fixation peut être réalisée par collage de la première branche 5 sur le clip 106. Chaque équerre 4 comprend d'autre part une deuxième branche 6 dans laquelle l'extrémité de la rampe 2 vient s'ancrer. A cette fin, la deuxième branche 6 présente une fente 12, et l'extrémité de la rampe 2 présente une patte de fixation 7 qui vient s'insérer dans la fente 12 de l'équerre. Cette patte de fixation 7 comporte un rebord 10 à son extrémité libre. La fente 12 présente donc une largeur au moins égale à l'épaisseur de ce rebord 10 afin de permettre l'insertion dudit rebord dans ladite fente.

En position de repos, la patte de fixation 7 forme avec la direction axiale de la rampe 2 un angle supérieur à 90°. Lorsqu'elle est insérée dans la fente 12 dans une position dite position d'ancrage (comme illustré sur la figure 2), la patte de fixation 7, qui est légèrement élastique en flexion, s'étend sensiblement orthogonalement à la direction axiale de la rampe. En position d'ancrage, la patte de fixation 7 est donc rappelée élastiquement en direction de la branche 5 de l'équerre. Le rebord 10 de la patte de fixation 7 forme alors une butée s'opposant au retrait de ladite patte de fixation. Pour désolidariser la rampe 2 de l'équerre 4, il suffit d'exercer une pression contre la patte de fixation 7 de ladite rampe en direction opposée à la branche 5 de l'équerre de façon à placer le rebord 10 en regard de la fente 12, puis de tirer sur la rampe 2 en direction opposée à la peau 102 du fuselage.

De préférence, la patte de fixation 7 présente de plus un épaulement 11 au-dessus du rebord 10, lequel épaulement 11 forme une butée s'opposant à l'enfoncement de la patte de fixation 7 dans la fente 12 de l'équerre 4. En d'autres termes, le rebord 10 et l'épaulement 11 délimitent une encoche dans laquelle vient s'emboîter un bord de la fente 12 lorsque la patte de fixation est en position d'ancrage.

A chaque extrémité de chaque rampe 2, l'équerre 4 et la patte de fixation 7 de la rampe -pourvus respectivement d'une fente 12, d'un rebord 10 et d'un épaulement 11- réalisent des moyens de fixation de la rampe 2 permettant la fixation de ladite rampe à un clip 106 du fuselage. Ainsi fixée à deux clips 106 portés par deux cadres 104 consécutifs, la rampe 2 s'étend devant un matelas de peau 108 (voir figure 2). Chacune de ses extrémités vient de plus en appui contre un matelas de cadre 110. Avantageusement, la rampe 2 comprend une ailette 8 qui s'étend sensiblement orthogonalement à la direction axiale de la rampe, dans le prolongement de la patte de fixation 7, lorsque cette dernière est en position d'ancrage. En d'autres termes, l'ailette 8 s'étend sensiblement parallèlement à l'âme du cadre 104 situé à proximité. Cette ailette 8 permet de maintenir le matelas de cadre 110 plaqué contre le cadre 104 ; elle est ci-après appelée ailette de maintien de matelas. De préférence, l'ailette 8 de maintien de matelas porte une bande d'accroche 14 de type Velcro^{®} (velours-crochets) destinée à coopérer avec une bande complémentaire collée ou cousue sur le matelas de cadre 110. Ces deux bandes contribuent au maintien du matelas de cadre 110, en empêchant ce dernier de glisser le long du cadre 104.

De façon analogue, chaque rampe 2 porte avantageusement, sur sa face destinée à être en regard d'un matelas de peau 108, une bande d'accroche 16 de type Velcro^{®} destinée à coopérer avec une bande complémentaire collée ou cousue sur le matelas de peau 108. Cette bande 16 peut s'étendre sur la totalité ou sur une partie seulement de la longueur de la rampe 2. Elle contribue au maintien du matelas de peau 108.

L'ensemble de fixation selon l'invention comprend par ailleurs des supports de système. Les figures 3 et 4 illustrent un premier support de système 18, particulièrement adapté pour recevoir un conduit 112 de circulation d'air conditionné ou autre conduit de fluide. Ce support de système 18 comprend d'une part une embase 22 pour sa fixation à la rampe 2, et d'autre part une bride 20, de section circulaire et ouverte, recevant le conduit 112.

La bride 20 présente un diamètre interne correspondant sensiblement au diamètre externe du conduit 112. Elle présente en outre une élasticité à la fois suffisamment grande pour permettre l'insertion du conduit 112 dans la bride et suffisamment faible pour retenir efficacement ledit conduit.

L'embase 22 est adaptée s'accoupler avec un logement 24 ménagé sur la rampe 2, chaque rampe présentant une pluralité de logements 24 identiques. Chaque logement 24 est formé par deux glissières 26 s'étendant orthogonalement à la direction axiale de la rampe. Chaque glissière 26 est solidaire de la rampe seulement sur une partie (dont une extrémité) de sa longueur, dite partie fixe, l'autre partie de la glissière restant libre. En position de repos, la distance séparant les extrémités libres des deux glissières 26 formant le logement 24 est inférieure à la largeur de l'embase 22 du support de système. La partie libre de chaque glissière 26 peut s'écarter par élasticité de l'autre glissière afin de permettre l'insertion de l'embase 22 du support de système dans le logement 24. A son extrémité fixe, chaque glissière 26 présente un retour formant butée 30 contre lequel vient s'appuyer l'embase 22 du support de système 18 lorsque ce dernier est en position de fixation. A son extrémité libre, chaque glissière 26 présente un ergot de verrouillage 28 apte à coopérer avec un doigt de verrouillage 32 du support de système pour le verrouillage du support de système 18 en position de fixation. Les glissières 26, le retour 30, l'ergot 28 et le doigt 32 s'opposent aux déplacements du support de système 18 relativement à la rampe 2 dans le plan de ladite rampe. Les déplacements du support de système 18 orthogonalement au plan de la rampe 2 sont quant à eux empêchés par une forme légèrement en queue d'aronde des glissières 26 de la rampe et de l'embase 22 du support de système.

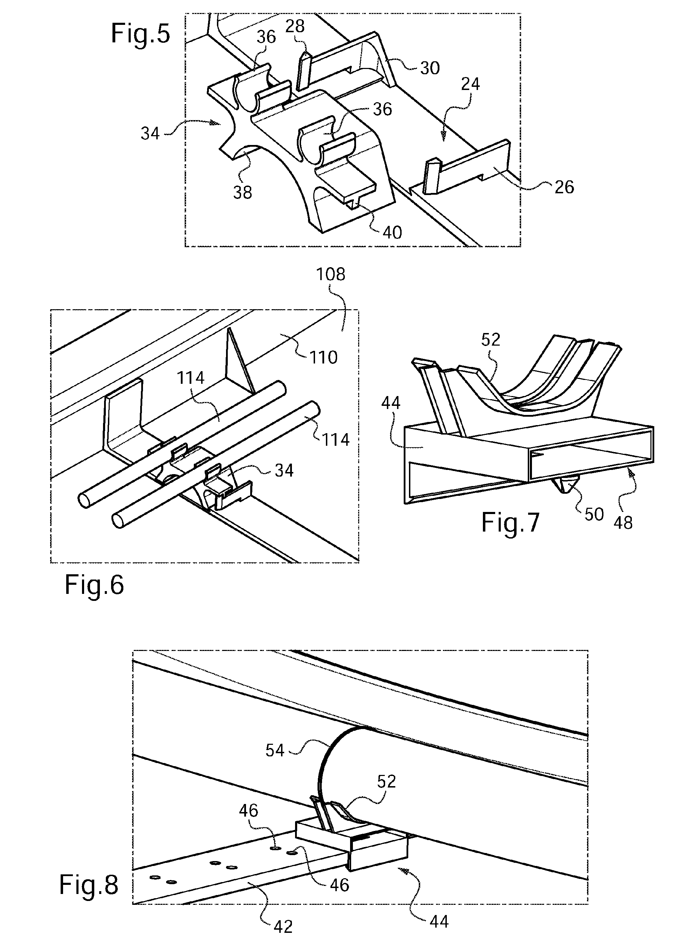

Les figures 5 et 6 illustrent un deuxième support de système 34, particulièrement adapté pour recevoir deux câbles 114 ou autres réseaux de faible section. Ce support de système 34 comprend une embase 38 identique à l'embase 22 du support de système 18, et deux doigts de verrouillage 40 identiques aux doigts 32 du support de système 18. A l'instar du support de système 18, le support de système 34 peut donc être agencé et fixé dans l'un quelconque des logements 24 ménagés sur chaque rampe 2.

Le support de système 34 comprend par ailleurs deux brides 36 de section circulaire et ouverte, pour la réception de deux câbles 114. Chaque bride 36 présente un diamètre interne correspondant sensiblement au diamètre externe d'un câble 114, et une élasticité adaptée pour permettre l'insertion et le maintien dudit câble dans ladite bride.

Les figures 7 et 8 illustrent un autre mode de réalisation d'un support de système selon l'invention. On peut y observer un support de système 44 apte à recevoir un conduit de fluide 112 et destiné à être fixé sur une rampe 42. Les rampes 2 et 42 diffèrent par la forme des logements qui y sont ménagés aux fins de fixation des supports de système. En dehors de ces logements, les rampes 2 et 42 sont de préférence identiques (notamment en ce qui concerne les moyens de fixation permettant la fixation des rampes aux clips de l'aéronef). Chaque logement ménagé dans la rampe 42 pour la fixation d'un support de système 44 est constitué par une paire de trous 46 circulaires traversants (les deux trous de la paire étant par exemple en regard selon la direction transversale de la rampe). Le support de système 44 comprend quant à lui une embase 48 comprenant deux pions 50, chaque pion 50 ayant une tête conique de verrouillage apte à se déformer élastiquement. Un tel support de système 44 est fixé sur la rampe 42 par encastrement de ses deux pions 50 dans deux trous circulaires 46 de la rampe. La tête conique de chaque pion 50 présente une grande base de diamètre supérieur au diamètre des trous 46. Comprimée lors de l'insertion du pion 50 dans le trou 46, ladite tête conique se relâche au sortir du trou et s'oppose alors au retrait du support de système.

Le support de système 44 comprend par ailleurs un siège 52, apte à supporter un conduit de fluide 112, et une languette avec attache autobloquante formant un lien 54 apte à entourer et maintenir ledit conduit.

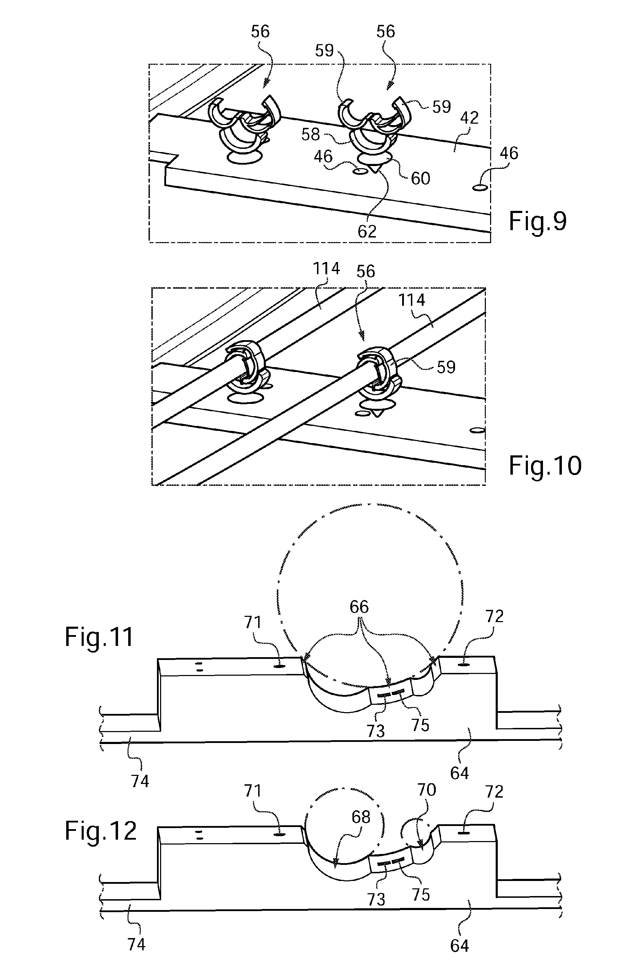

Pour le support des câbles électriques, il est possible de prévoir des supports de système (non représentés) comprenant d'une part une embase identique à l'embase 48 du support 44, et d'autre part des moyens d'attache d'un ou de plusieurs câbles tels un ou plusieurs liens éventuellement associés chacun à un siège (de section réduite par rapport à celui illustré sur les figures). En variante, on peut utiliser des supports de système 56 tels ceux représentés sur les figures 9 et 10. Chaque support de système 56 comprend une embase 60 comprenant un unique pion 62, identique au pion 50 précédemment décrit et par conséquent apte à venir s'encastrer et se bloquer dans un trou 46 de la rampe 42. Chaque support de système 56 comprend par ailleurs un socle 58 portant deux mâchoires 59. Le socle 58 présente la forme d'une bande incurvée. Chacune de ses deux extrémités forme une charnière sur laquelle est articulée une mâchoire 59 de manière à pouvoir pivoter par rapport au socle 58. Chacune des mâchoires 59 se présente elle aussi sous la forme d'une bande incurvée. Les deux mâchoires 59 sont reliées entre elles par une troisième charnière. En position fermée (voir figure 10), les mâchoires 59 délimitent un logement cylindrique de section globalement circulaire dont le diamètre correspond sensiblement au diamètre d'un câble électrique 114. En position ouverte (voir figure 9), les mâchoires 59 sont pivotées d'environ 90° vers l'extérieur par rapport à la position fermée et forment ainsi un W. Une simple pression sur le câble 114 placé au centre de ce W permet de fermer les mâchoires 59 et d'emprisonner ainsi le câble 114. Le support de système 56 est verrouillé en position fermée grâce à la présence d'épaulements formés aux extrémités libres des mâchoires 59, ces épaulements formant un jeu de crochets complémentaires.

Les figures 11 et 12 montrent un autre mode de réalisation d'un support de système selon l'invention. Un tel support de système 64 permet de fixer à une rampe 74 soit un conduit 112 d'air conditionné, soit un ou plusieurs câbles électriques 114, soit encore un câble électrique 114 et un autre réseau de diamètre intermédiaire entre un câble et un conduit d'air. Ce support de système 64 comprend une cavité 66 formée dans une zone d'épaisseur accrue de la rampe 74. Cette cavité 66 présente une pluralité de portions cylindriques circulaires (le terme circulaire signifiant ici que la portion cylindrique présente une section en arc de cercle) ayant des diamètres différents. On peut notamment observer une portion circulaire 70 dont le diamètre correspond sensiblement à celui d'un câble électrique 114, et une portion circulaire 68 de diamètre supérieur. La cavité 66 présente également des portions cylindriques 66, de préférence circulaires, qui définissent ensemble un logement cylindrique circulaire de grand diamètre pour la réception d'un conduit de fluide 112. Le support de système 64 comprend par ailleurs une fente 71, 72 de chaque côté de la cavité 66 et deux fentes 73, 75 entre les portions circulaires 68 et 70 de ladite cavité. Chacune de ces fentes peut recevoir un lien à attache autobloquante (non représenté). Il est ainsi possible d'attacher un conduit de fluide 112 à l'aide d'un lien ancré dans les fentes 71 et 72, ou, en variante, un câble 114 à l'aide d'un lien ancré dans les fentes 75 et 72 et un autre réseau de diamètre intermédiaire à l'aide d'un lien ancré dans les fentes 71 et 73.

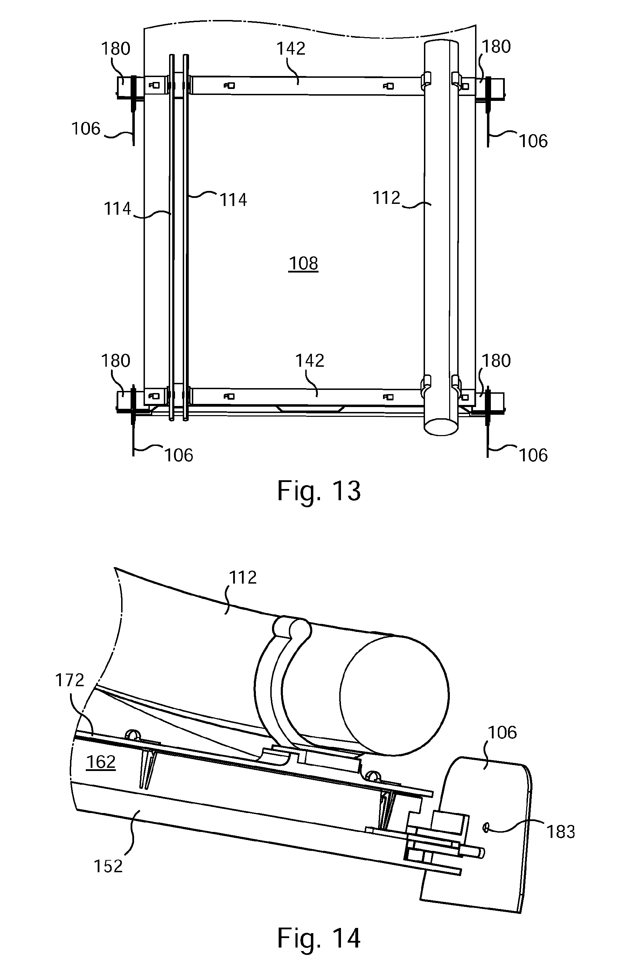

Les figures 13 à 20 illustrent une variante de réalisation d'un ensemble de fixation selon la présente invention. On retrouve ici une structure similaire comprenant des cadres (non représentés) similaires aux cadres 104 de la figure 1. Une peau est fixée aux cadres par des clips 106 (figures 13 et 14).

La peau est recouverte de matelas de peau 108 s'étendant d'une part entre les cadres de la structure et d'autre part entre deux rampes 142 successives.

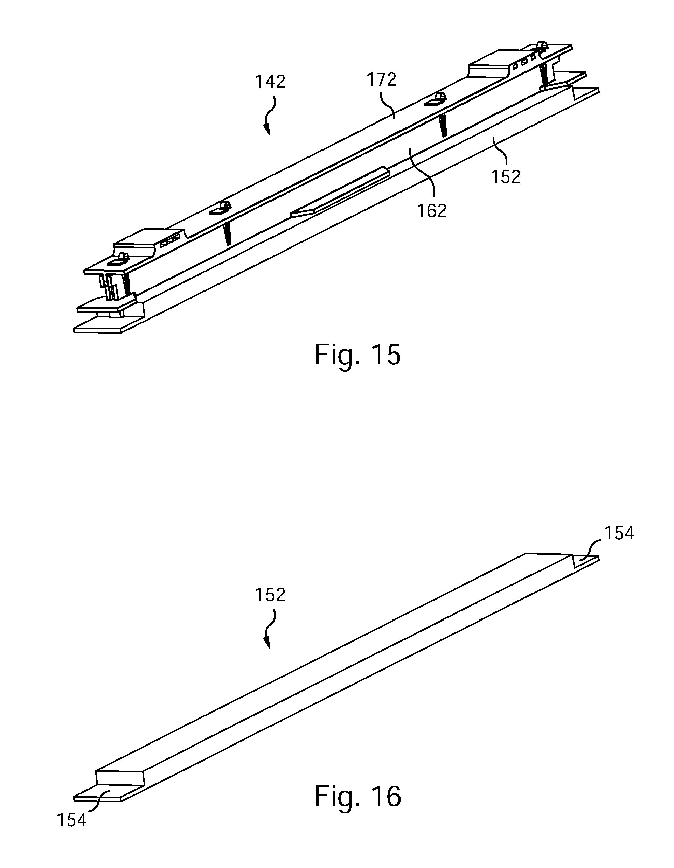

Sur la figure 13, on a représenté un conduit 112 de circulation d'air conditionné et des câbles électriques 114 qui sont agencés devant les matelas de peau 108. Ces systèmes sont fixés à la structure du fuselage par l'intermédiaire de rampes 142 telles celles montrées sur la figure 15. Comme pour le mode de réalisation décrit en référence aux figures 1 à 12, chaque rampe 142 s'étend sensiblement horizontalement entre deux cadres consécutifs du fuselage en étant fixée à chacune de ses extrémités à un clip 106 du fuselage.

Dans cette forme de réalisation, la rampe 142 est formée de trois pièces : une pièce inférieure 152, une pièce centrale 162 et une pièce supérieure 172.

La pièce inférieure 152 est représentée sur la figure 16. Elle se présente sous la forme d'une barre profilée à section rectangulaire. Elle présente à chacune de ces extrémités une languette 154 d'épaisseur moindre que la partie centrale de la pièce inférieure 152.

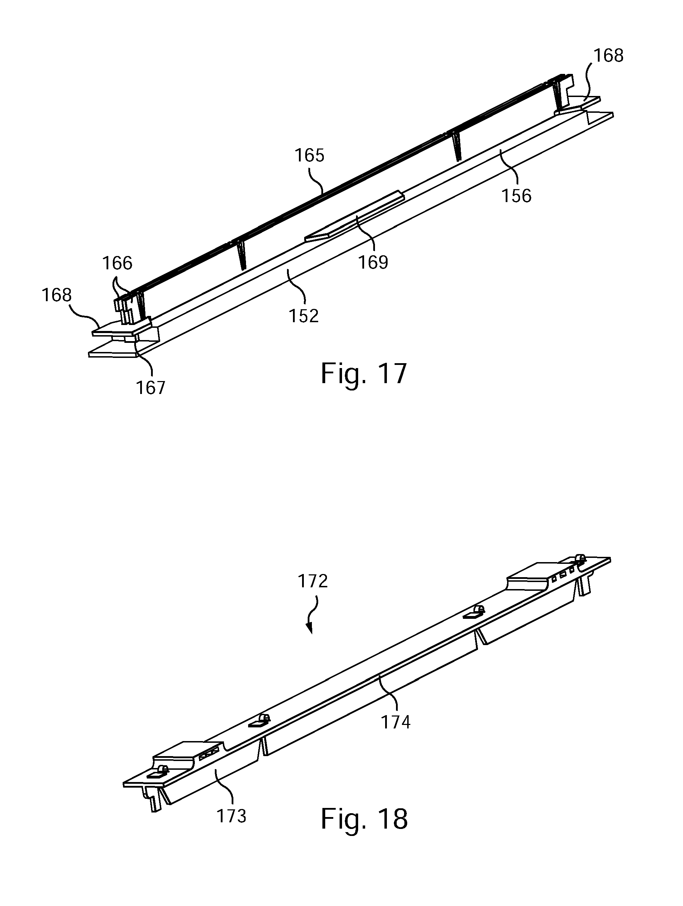

La pièce centrale 162 se présente sous la forme d'une pièce profilée de section en U. La base du U est très étroite par rapport à la hauteur des branches. Comme illustré sur la figure 17, la base de la pièce centrale 162 est centrée sur la pièce inférieure 152. L'espace 165 entre les branches 166 de la pièce centrale 162 présente une largeur du même ordre de grandeur que l'épaisseur de chacune des branches 166. A chacune de ses extrémités, la pièce centrale porte une languette 168 qui s'étend dans le plan de sa base, parallèlement aux languettes 154. On remarque également des languettes centrales 169 qui permettent de donner à la pièce centrale 162 une meilleure assise sur la pièce inférieure 152. On remarque également la présence de fentes transversales réalisées dans la pièce centrale 162.

La pièce supérieure 172 est de forme globale profilée avec une section transversale en T. Ainsi, la pièce supérieure présente une base 173 et deux ailes appelées par la suite ailes supérieures 174. La pièce supérieure 172 est destinée à venir s'emboîter dans la pièce centrale 162, la base 173 venant s'insérer dans l'espace 165 entre les deux branches 166 de la pièce centrale 162. Lorsque la pièce supérieure 172 est emboîtée dans la pièce centrale 162, les ailes supérieures 174 viennent faire face aux bords longitudinaux de la pièce inférieure 152 qui forment alors des ailes inférieures 156. L'assemblage de la pièce inférieure 152 avec la pièce centrale 162 et la pièce supérieure 172 est réalisé par exemple par collage et/ou encliquetage. Cet ensemble forme alors une rampe 142 dont la forme générale est celle d'une pièce allongée avec une section transversale en I. Cette rampe 142 présente ainsi un corps central duquel s'étendent d'une part deux ailes inférieures 156 et d'autre part deux ailes supérieures 174. L'espace entre une aile inférieure 156 et une aile supérieure 174, d'un côté du corps central de la rampe, est prévu pour recevoir une extrémité d'un matelas de peau 108 et maintenir celle-ci.

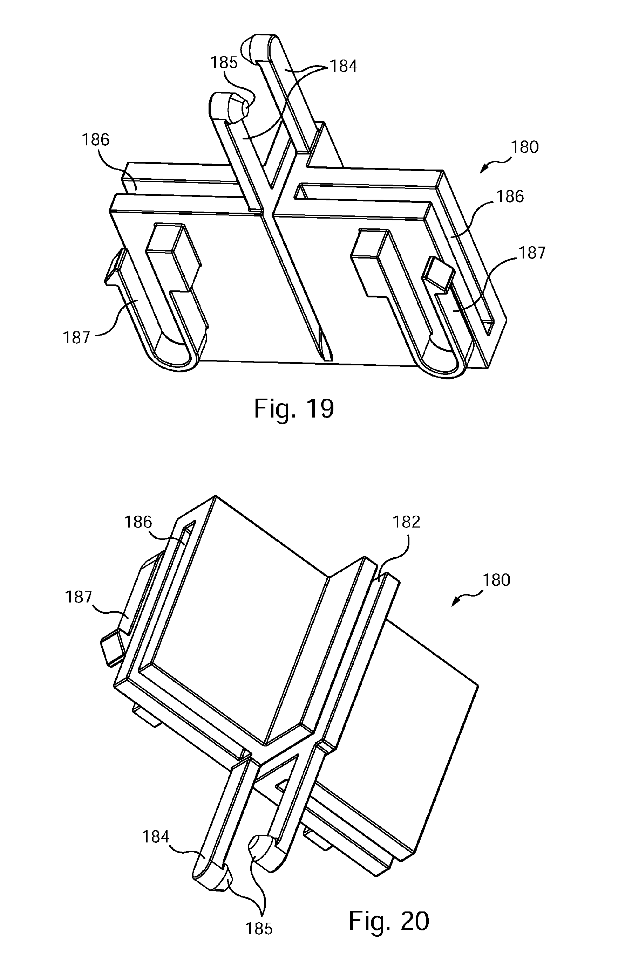

Les figures 19 et 20 illustrent une pièce de liaison 180 permettant de relier la rampe à un clip 106. On remarque que cette pièce 180 est destinée à maintenir deux extrémités de rampes, une première extrémité d'une rampe se trouvant d'un côté d'un clip 106 et une extrémité d'une autre rampe se trouvant de l'autre côté du même clip 106. Cette pièce de liaison présente une fente centrale 182 dans laquelle est destinée à prendre place une partie du clip 106 sur lequel la pièce de liaison 180 doit venir se fixer. Pour maintenir la position de la pièce de liaison 180 sur le clip 106 correspondant, il est prévu d'une part de réaliser un alésage 183 dans le clip 106 et d'autre part de munir la pièce de liaison 180 de deux bras élastiques 184 (un pour chaque rampe) muni à son extrémité d'un pion 185 de dimension adaptée à l'alésage 183 correspondant réalisé dans le clip 106.

La pièce de liaison 180 présente également des fentes latérales 186, une fente latérale 186 étant disposée de chaque côté de la fente centrale 182. Les fentes latérales 186 s'étendent dans un plan perpendiculaire à celui de la fente centrale 182. Chacune des fentes latérales 186 est destinée à recevoir une languette 168 d'une pièce centrale 162 d'une rampe 142. On remarque sous les languettes 168 la présence d'un doigt 167. Ce dernier est destiné à venir coopérer avec un doigt d'encliquetage 187 ménagé sous la pièce de liaison 180 pour chacune des deux rampes.

La face supérieure des ailes supérieures 174 est destinée à recevoir des supports de systèmes. Ceci est illustré sur les figures 13 et 14. Tout type de support de systèmes peut être utilisé ici et il est fait référence à la description des figures 1 à 12 concernant les supports de systèmes pouvant être utilisés dans cette seconde forme de réalisation d'un ensemble de fixation selon l'invention.

Pour la mise en place d'un ensemble de fixation conformément à cette seconde forme de réalisation, les pièces de liaison 180 sont tout d'abord mises en place sur les clips 106 correspondants. Une solidarisation par collage peut être envisagée pour garantir une excellente fixation de la pièce de liaison 180 sur le clip 106 correspondant.

La pièce inférieure 152 de la rampe 142 est collée à la pièce centrale 162. Cette pièce inférieure 152 est de préférence réalisée dans une mousse isolante afin de permettre, en position montée, de réaliser une liaison d'isolants entre les matelas de peau 108 se trouvant de part et d'autre d'une rampe 142. La pièce centrale 162 est alors montée sur les pièces de liaison 180 correspondantes en introduisant à chaque fois une languette 168 dans une fente latérale 186. Le montage se fait par encliquetage à l'aide du doigt 167 se trouvant sous la languette 168 de la pièce centrale 162 et au doigt d'encliquetage 187 correspondant de la pièce de liaison 180.

Les matelas de cadre (non représentés sur les figures 13 à 20) sont alors positionnés et maintenus sur les cadres (non représentés également) correspondants. Les matelas de peau 108 sont disposés d'une part entre les cadres et d'autre part entre les rampes 142. La pièce supérieure 172 peut venir alors s'engager dans la pièce centrale 162 et venir ainsi maintenir les bords des matelas de peau 108 qui viennent reposer contre les branches 166 de la pièce centrale 162 de chaque rampe 142. Les matelas de peau 108 lorsqu'ils sont positionnés entre les cadres et les rampes 142 viennent maintenir les bords libres des matelas de cadres (non représentés).

Enfin, les supports de systèmes peuvent être montés sur les ailes supérieures 174 de la rampe et accueillir les systèmes correspondants, par exemple des conduits 112 de circulation d'air conditionné et/ou des câbles électriques 114.

Comme il ressort de la description qui précède, un ensemble de fixation selon la présente invention est facile à monter. Il présente également une grande flexibilité. On remarque en effet que tous types de systèmes peuvent être montés sur les rampes.

Le montage d'un ensemble de fixation selon la présente invention ne nécessite pas l'utilisation d'outil spécifique. Il permet également d'éviter de faire des trous dans la structure lors du montage.

La présente invention présente également l'avantage de permettre de facilement démonter les systèmes montés sur les rampes et/ou les matelas isolants.

L'invention peut faire l'objet de nombreuses variantes par rapport aux modes de réalisation illustrés, dès lors que ces variantes entrent dans le cadre délimité par les revendications.

## Revendications

1. Ensemble de fixation pour la fixation de systèmes dans un aéronef comprenant des cadres (104), une peau (102) et des pièces de liaison entre la peau et les cadres, dites clips (106), comprenant :
- des rampes (2 ; 42 ; 74), chaque rampe étant adaptée pour s'étendre entre deux cadres consécutifs de l'aéronef,
- des supports de système (18, 34, 56, 64), fixés ou adaptés pour être fixés aux rampes, chaque support de système pouvant recevoir au moins un système, **caractérisé en ce qu'**il comprend : - pour chaque rampe, des moyens de fixation de la rampe (4, 7) permettant la fixation de ladite rampe à deux clips (106) situés respectivement sur deux cadres consécutifs de l'aéronef.

2. Ensemble de fixation selon la revendication 1, **caractérisé en ce que**, pour chaque rampe (2 ; 42), les moyens de fixation de la rampe comprennent :
- deux équerres (4), chaque équerre présentant une première branche (5) destinée à être fixée à un clip de l'aéronef et une deuxième branche (6) pourvue d'une fente (12),
- à chacune des extrémités de la rampe, une patte de fixation (7) adaptée pour pouvoir être insérée dans la fente (12) de l'une desdites équerres, chaque patte de fixation comportant à son extrémité libre un rebord (10) qui forme une butée s'opposant au retrait la patte de fixation une fois celle-ci insérée dans ladite fente.

3. Ensemble de fixation selon l'une des revendications 1 ou 2, **caractérisé en ce qu'**au moins une rampe (2 ; 42) comprend, à chacune de ses extrémités, une ailette (8), dite ailette de maintien de matelas, s'étendant sensiblement orthogonalement à une direction axiale de la rampe et destinée à s'étendre dans une direction opposée à la peau de l'aéronef aux fins de maintien d'un matelas isolant (110) dit matelas de cadre.

4. Ensemble de fixation selon la revendication 1, **caractérisé en ce qu'**au moins une rampe (142) présente une forme globale allongée avec une section en I, présentant un corps central (162) duquel s'étendent sur deux côtés opposés à chaque fois deux ailes (156, 174), et **en ce que** le logement formé entre deux ailes disposées d'un même côté du corps central est adapté pour recevoir un flanc de matelas isolant (108).

5. Ensemble de fixation selon la revendication 4, **caractérisé en ce que** chaque rampe (142) présentant une forme globale allongée avec une section en I, est réalisée en trois pièces, une pièce inférieure (152) comportant deux ailes inférieures (156), une pièce centrale (162) et une pièce supérieure (172) comportant deux ailes supérieures (174), et **en ce qu'**une pièce de liaison (180) est disposée à chaque extrémité de rampe en assurant d'une part la liaison des trois pièces (152, 162, 172) de la rampe (142) et d'autre part la liaison de la rampe (142) à un clip (106).

6. Ensemble de fixation selon l'une des revendications 1 à 5, **caractérisé en ce que** chaque support de système (18 ; 34 ; 44 ; 56) comporte une embase (22 ; 38 ; 48 ; 60) adaptée pour s'accoupler avec un logement (24 ; 46) ménagé sur une rampe (2 ; 42), chaque rampe comprenant une pluralité de logements.

7. Ensemble de fixation selon la revendication 6, **caractérisé en ce que** les logements (24 ; 46) ménagés sur les rampes sont tous identiques et les embases (22, 38 ; 48 ; 60) des supports de système sont toutes identiques, indépendamment des systèmes à fixer.

8. Ensemble de fixation selon l'une des revendications 6 ou 7, **caractérisé en ce que** l'embase (22, 38 ; 48 ; 60) de chaque support de système et chacun des logements (24 ; 46) ménagés sur les rampes présentent des sections complémentaires et comportent des moyens de verrouillage s'opposant au retrait du support de système.

9. Ensemble de fixation selon la revendication 8, **caractérisé en ce que** l'embase (22, 38) de chaque support de système et chacun des logements (24) ménagés sur les rampes présentent des sections complémentaires en queue d'aronde.

10. Ensemble de fixation selon la revendication 8, **caractérisé en ce que** chacun des logements (46) ménagés sur les rampes est constitué d'au moins un trou, et **en ce que** l'embase (48 ; 60) de chaque support de système comprend au moins un pion (50 ; 62) muni à son extrémité libre d'une tête conique déformable élastiquement apte à être insérée dans un trou d'une rampe et à s'opposer au retrait du support de système.

11. Ensemble de fixation selon l'une des revendications 1 à 5, **caractérisé en ce que** chaque support de système (64) comprend d'une part une cavité (66) formée sur la rampe (74) ayant une section adaptée pour recevoir des systèmes cylindriques circulaires ayant des diamètres divers, et d'autre part au moins un lien et des moyens (71, 72) d'ancrage de lien de part et d'autre de ladite cavité.

12. Aéronef, **caractérisé en ce qu'**il comprend au moins un ensemble de fixation selon l'une des revendications 1 à 11 et des systèmes fixés à l'aide dudit ensemble de fixation.

## Patentansprüche

1. Befestigungseinheit zur Befestigung von Systemen in einem Luftfahrzeug, das Rahmen (104), eine Haut (102) und Verbindungsbauteile, sogenannte Clips (106), zwischen der Haut und den Rahmen enthält, die enthält:
- Rampen (2; 42; 74), wobei jede Rampe geeignet ist, um sich zwischen zwei aufeinanderfolgenden Rahmen des Luftfahrzeugs zu erstrecken,
- Systemträger (18, 34, 56, 64), die an den Rampen befestigt oder geeignet sind, daran befestigt zu werden, wobei jeder Systemträger mindestens ein System aufnehmen kann,
**dadurch gekennzeichnet, dass** sie enthält:
- für jede Rampe Einrichtungen zur Befestigung der Rampe (4, 7), die die Befestigung der Rampe an zwei an zwei aufeinanderfolgenden Rahmen des Luftfahrzeugs befindlichen Clips (106) ermöglichen.

2. Befestigungseinheit nach Anspruch 1, **dadurch gekennzeichnet, dass** die Befestigungseinrichtungen der Rampe für jede Rampe (2; 42) enthalten:
- zwei Winkelbeschläge (4), wobei jeder Winkelbeschlag einen ersten Schenkel (5), der dazu bestimmt ist, an einem Clip des Luftfahrzeugs befestigt zu werden, und einen zweiten Schenkel (6) aufweist, der mit einem Schlitz (12) versehen ist,
- an jedem der Enden der Rampe eine Befestigungslasche (7), die geeignet ist, um in den Schlitz (12) eines der Winkelbeschläge eingeführt werden zu können, wobei jede Befestigungslasche an ihrem freien Ende eine Randleiste (10) aufweist, die einen Anschlag bildet, der sich dem Herausziehen der Befestigungslasche widersetzt, wenn diese in den Schlitz eingeführt ist.

3. Befestigungseinheit nach einem der Ansprüche 1 oder 2, **dadurch gekennzeichnet, dass** mindestens eine Rampe (2; 42) an jedem ihrer Enden eine Rippe (8) enthält, Mattenhalterippe genannt, die sich im Wesentlichen orthogonal zu einer axialen Richtung der Rampe erstreckt und dazu bestimmt ist, sich in einer Richtung entgegengesetzt zur Haut des Luftfahrzeugs zum Zweck des Halts einer Rahmenmatte genannten Isoliermatte (110) zu erstrecken.

4. Befestigungseinheit nach Anspruch 1, **dadurch gekennzeichnet, dass** mindestens eine Rampe (142) eine global längliche Form mit einem I-förmigen Querschnitt aufweist, mit einem zentralen Körper (162), von dem aus sich auf jeweils zwei gegenüberliegenden Seiten zwei Flügel (156, 174) erstrecken, und dass die zwischen zwei auf der gleichen Seite des zentralen Körpers angeordneten Flügeln gebildete Aufnahme geeignet ist, um eine Isoliermattenflanke (108) aufzunehmen.

5. Befestigungseinheit nach Anspruch 4, **dadurch gekennzeichnet, dass** jede Rampe (142) mit einer global länglichen Form mit einem I-förmigen Querschnitt aus drei Bauteilen hergestellt ist, einem zwei untere Flügel (156) aufweisenden unteren Bauteil (152), einem zentralen Bauteil (162) und einem zwei obere Flügel (174) aufweisenden oberen Bauteil (172), und dass ein Verbindungsbauteil (180) an jedem Rampenende angeordnet ist, indem es einerseits die Verbindung der drei Bauteile (152, 162, 172) der Rampe (142) und andererseits die Verbindung der Rampe (142) mit einem Clip (106) gewährleistet.

6. Befestigungseinheit nach einem der Ansprüche 1 bis 5, **dadurch gekennzeichnet, dass** jeder Systemträger (18; 34; 44; 56) einen Sockel (22; 38; 48; 60) aufweist, der geeignet ist, um mit einer Aufnahme (24; 46) gekoppelt zu werden, die auf einer Rampe (2; 42) ausgespart ist, wobei jede Rampe eine Vielzahl von Aufnahmen enthält.

7. Befestigungseinheit nach Anspruch 6, **dadurch gekennzeichnet, dass** die auf den Rampen ausgesparten Aufnahmen (24; 46) alle gleich sind, und die Sockel (22, 38; 48; 60) der Systemträger alle gleich sind, unabhängig von den zu befestigenden Systemen.

8. Befestigungseinheit nach einem der Ansprüche 6 oder 7, **dadurch gekennzeichnet, dass** der Sockel (22, 38; 48; 60) jedes Systemträgers und jede der auf den Rampen ausgesparten Aufnahmen (24; 46) komplementäre Querschnitte haben und Verriegelungseinrichtungen aufweisen, die sich dem Herausziehen des Systemträgers widersetzen.

9. Befestigungseinheit nach Anspruch 8, **dadurch gekennzeichnet, dass** der Sockel (22, 38) jedes Systemträgers und jede der auf den Rampen ausgesparten Aufnahmen (24) komplementäre schwalbenschwanzförmige Querschnitte haben.

10. Befestigungseinheit nach Anspruch 8, **dadurch gekennzeichnet, dass** jede der auf den Rampen ausgesparten Aufnahmen (46) aus mindestens einem Loch besteht, und dass der Sockel (48; 60) jedes Systemträgers mindestens einen Zapfen (50; 62) enthält, der an seinem freien Ende mit einem elastisch verformbaren, kegelförmigen Kopf versehen ist, der in ein Loch einer Rampe eingeführt werden und sich dem Herausziehen des Systemträgers widersetzen kann.

11. Befestigungseinheit nach einem der Ansprüche 1 bis 5, **dadurch gekennzeichnet, dass** jeder Systemträger (64) einerseits eine auf der Rampe (74) geformte Vertiefung (66), die einen geeigneten Querschnitt hat, um kreisförmige zylindrische Systeme mit unterschiedlichen Durchmessern aufzunehmen, und andererseits mindestens ein Bindeglied und Einrichtungen (71, 72) zur Bindegliedverankerung zu beiden Seiten der Vertiefung enthält.

12. Luftfahrzeug, **dadurch gekennzeichnet, dass** es mindestens eine Befestigungseinheit nach einem der Ansprüche 1 bis 11 und Systeme enthält, die mit Hilfe der Befestigungseinheit befestigt sind.

## Claims

1. Fastening assembly for the fastening of systems in an aircraft comprising frames (104), a skin (102) and connecting parts between the skin and the frames, referred to as clips (106), comprising:
- ramps (2; 42; 74), each ramp being adapted for extending between two consecutive frames of the aircraft,
- system supports (18, 34, 56, 64), fastened or adapted for being fastened to the ramps, each system support being able to receive at least one system, **characterised in that** it comprises: - for each ramp, means (4, 7) for fastening the ramp allowing fastening of the said ramp to two clips (106) situated respectively on two consecutive frames of the aircraft.

2. Fastening assembly according to claim 1, **characterised in that**, for each ramp (2; 42), the means for fastening the ramp comprise:
- two brackets (4), each bracket having a first branch (5) intended to be fastened to a clip of the aircraft and a second branch (6) provided with a slot (12),
- at each of the ends of the ramp, a securing lug (7) adapted for being able to be inserted in the slot (12) of one of the said brackets, each securing lug comprising at its free end an edge (10) that forms a stop countering displacement of the securing lug once the latter is inserted in the said slot.

3. Fastening assembly according to one of claims 1 or 2, **characterised in that** at least one ramp (2; 42) comprises, at each of its ends, a fin (8), referred to as blanket-holding fin, extending more or less orthogonally to an axial direction of the ramp and intended to extend in a direction opposite to the skin of the aircraft for the purpose of holding an insulation blanket (110) referred to as frame blanket.

4. Fastening assembly according to claim 1, **characterised in that** at least one ramp (142) has an overall elongated form with an I-shaped section, having a central body 162 from which two flanges (156, 174) extend on two opposite sides in each instance, and **in that** the housing formed between two flanges disposed on the same side of the central body is adapted for receiving an insulation blanket flank (108).

5. Fastening assembly according to claim 4, **characterised in that** each ramp (142) having an overall elongated form with an I-shaped section, is made in three parts, a lower part (152) comprising two lower flanges (156), a central part (162) and an upper part (172) comprising two upper flanges (174), and **in that** a connecting part (180) is disposed at each ramp end, ensuring on the one hand the connection of the three parts (152, 162, 172) of the ramp (142) and on the other hand the connection of the ramp (142) to a clip (106).

6. Fastening assembly according to one of claims 1 to 5, **characterised in that** each system support (18, 34; 44; 56) comprises a base (22; 38; 48; 60) adapted for being coupled with a housing (24; 46) arranged on a ramp (2; 42), each ramp comprising a plurality of housings.

7. Fastening assembly according to claim 6, **characterised in that** the housings (24; 46) arranged on the ramps are all identical and the bases (22, 38; 48; 60) of the system supports are all identical, irrespective of the system to be fastened.

8. Fastening assembly according to one of claims 6 or 7, **characterised in that** the base (22, 38; 48; 60) of each system support and each of the housings (24; 46) arranged on the ramps have complementary sections and comprise locking means countering displacement of the system support.

9. Fastening assembly according to claim 8, **characterised in that** the base (22, 38) of each system support and each of the housings (24) arranged on the ramps have complementary dovetail sections.

10. Fastening assembly according to claim 8, **characterised in that** each of the housings (46) arranged on the ramps is made up of at least one hole, and **in that** the base (48; 60) of each system support comprises at least one pin (50; 62) equipped at its free end with an elastically deformable conical head able to be inserted in a hole of a ramp and to counter displacement of the system support.

11. Fastening assembly according to one of claims 1 to 5, **characterised in that** each system support (64) comprises on the one hand a recess (66) formed on the ramp (74) having a section adapted for receiving circular cylindrical systems having various diameters, and on the other hand at least one link and link anchoring means (71, 72) on both sides of the said recess.

12. Aircraft, **characterised in that** it comprises at least one fastening assembly according to one of claims 1 to 11 and systems fastened with the aid of the said fastening assembly.
